# EUROPÄISCHE PATENTSCHRIFT

(11) **EP 1 989 432 B1**
(45) Veröffentlichungstag und Bekanntmachung des Hinweises auf die Patenterteilung: **11.04.2012**
(21) Anmeldenummer: 07703407.2
(22) Anmeldetag: 12.02.2007
(51) Int. Cl.: F02M 25/07, F16K 49/00

(54) **VENTIL ZUR REGELUNG EINES ABGASSTROMS EINES VERBRENNUNGSMOTORS, WÄRMETÄUSCHER ZUR ABGASKÜHLUNG, SYSTEM MIT ZUMINDEST EINEM VENTIL UND MIT ZUMINDEST EINEM WÄRMETÄUSCHER**
VALVE FOR REGULATING AN EXHAUST GAS FLOW OF AN INTERNAL COMBUSTION ENGINE, HEAT EXCHANGER FOR EXHAUST GAS COOLING, SYSTEM HAVING AT LEAST ONE VALVE AND HAVING AT LEAST ONE HEAT EXCHANGER
SOUPAPE DE REGULATION DE L'ECOULEMENT DE GAZ D'ECHAPPEMENT D'UN MOTEUR A COMBUSTION INTERNE, ECHANGEUR DE CHALEUR DESTINE AU REFROIDISSEMENT DES GAZ D'ECHAPPEMENT, SYSTEME DOTE D'AU MOINS UNE SOUPAPE ET D'AU MOINS UN ECHANGEUR DE CHALEUR

(30) Priorität: 24.02.2006 DE 102006009151
(43) Veröffentlichungstag der Anmeldung: 12.11.2008
(73) Patentinhaber: Behr GmbH & Co. KG, 70469 Stuttgart (DE)
(72) Erfinder: CHRIST, Maren, 90461 Nürnberg (DE); MÜLLER, Rolf, 71642 Ludwigsburg (DE)
(74) Vertreter: Grauel, Andreas
(86) Internationale Anmeldenummer: PCT/EP2007/001175
(87) Internationale Veröffentlichungsnummer: WO 2007/098854

(56) Entgegenhaltungen:
- EP-A- 1 338 785
- EP-A- 1 355 057
- EP-A- 1 464 823
- EP-A- 1 519 017
- EP-A- 1 589 214
- EP-A1- 1 426 603
- EP-A2- 0 908 615
- WO-A-2005/073535
- DE-A1- 10 346 250
- DE-A1- 19 920 520
- US-A- 3 267 954
- US-A1- 2005 103 013
- US-B1- 6 871 699

## Beschreibung

Die vorliegende Erfindung betrifft ein Ventil zur Regelung eines Abgasstroms eines Verbrennungsmotors nach dem Oberbegriff des Anspruchs 1 sowie einen Wärmetauscher zur Abgaskühlung mit zumindest einem Ventil und ein System mit zumindest einem Ventil und mit zumindest einem Wärmetauscher.

Zur Erfüllung der aktuellen und künftigen Abgasemmissionsvorschriften wird bei Dieselmotoren und/oder Ottomotoren für Personenkraftwagen oder für Nutzfahrzeuge eine gekühlte Abgasrückführung als Mittel zur Minderung der Stickoxidemmissionen (NOx) eingesetzt. Zuverlässigkeitsprobleme dieser Systeme sind beispielsweise durch Ausfälle oder Störungen des AGR-Ventils begründet, welche ihre Ursachen in der thermischen Belastung durch den heißen Abgasstrom bzw. in der Bildung von Ablagerungen aus dem Abgasstrom haben. Ein AGR-Ventil regelt insbesondere den Massenstrom von rückgeführtem Abgas, mit welchem ein Wärmetauscher, insbesondere ein Abgaswärmetauscher, durchströmt werden kann. Das AGR-Ventil ist zumeist elektrisch oder pneumatisch ansteuerbar bzw. betätigbar. Das AGR-Ventil kann verschiedene Steuerungs- bzw. Regelungspositionen aufweisen. In einer ersten Position verhindert das AGR-Ventil beispielsweise, dass der Abgaswärmetauscher mit Abgas durchströmt wird. In einer zweiten Position wird beispielsweise der Abgaswärmetauscher mit dem gesamten Massenstrom an rückgeführtem Abgas durchströmt. In einer dritten Position des AGR-Ventils wird der Abgaswärmetauscher mit einem Massenstrom an rückgeführtem Abgas durchströmt, der zwischen keinem Massenstrom an rückgeführtem Abgas und dem maximalen Massenstrom an rückgeführtem Abgas beträgt.

Das AGR-Ventil kann stromabwärts oder stromaufwärts des Wärmetauschers, insbesondere des Abgaskühlers, angeordnet sein. Ferner kann das AGR-Ventil im oder benachbart des Abgaskühlers angeordnet sein. In einer weiteren Ausführung kann das AGR-Ventil einteilig mit dem Wärmetauscher, insbesondere dem Abgaskühler, ausgebildet sein.

Das AGR-Ventil und der Wärmetauscher, insbesondere der Abgaskühler, kann in einem System aufweisend mindestens einen Verbrennungsmotor und zumindest eine Turbine, mit der insbesondere ein Kompressor zur Ladeluft- bzw. Ladeluft- und Abgasaufladung antreibbar ist, auf der Abströmseite der Turbine, d. h. niederdruckseitig, oder zustromseitig der Turbine, d.h. hochdruckseitig, angeordnet sein.

Bei der Anordnung des AGR-Ventils zuströmseitig des Wärmetauschers, insbesondere des Abgaskühlers, wird das AGR-Ventil hohen Temperaturanforderungen aufgrund des heißen Abgases ausgesetzt. Dabei ist bekannt, dass die Temperaturanforderung des AGR-Ventils reduziert werden kann, wenn das Abgas dem AGR-Ventil nicht direkt aus dem Abgastrakt zugeführt wird, sondern erst nach einer Passage des rückgeführten Abgases durch den Zylinderkopf des Motors dem AGR-Ventil bzw. dem Abgaswärmetauscher zugeführt wird. Durch diese Abgasführung wird dem heißen Abgas vor dem Kontakt mit dem AGR-Ventil bereits Wärme durch das Motorkühlmittel entzogen. Dennoch erfährt das AGR-Ventil immer noch eine sehr hohe Temperaturbelastung.

Die Anordnung des AGR-Ventils abströmseitig des Abgaskühlers wird zumeist gewählt, um die Temperaturbelastung des AGR-Ventils und des entsprechenden Aktuators, insbesondere des elektrischen oder pneumatischen Aktuators, zu reduzieren. Nachteilig dabei ist jedoch, dass die im Abgas enthaltenen unverbrannten Kohlenwasserstoffe (HC) in Verbindung mit Rußpartikeln Ablagerungen auf dem AGR-Ventil bilden. Durch die relativ niedrigen Gastemperaturen nach dem Durchströmen des Abgaswärmetauschers können die gebildeten Ablagerungen im AGR-Ventil nur schwer wieder entfernt werden, da beispielsweise ein Abbrennen der Ablagerungen nur schwer möglich ist. Die Ablagerungen führen dazu, dass das Ventil durch Verrußen oder Verkoken blockiert und damit nicht mehr funktionsfähig ist.

Die Anordnung des AGR-Ventils zuströmseitig des Abgaskühlers ermöglicht hingegen aufgrund der hohen Abgastemperaturen vor dem Abgaswärmetauscher den Abbrand der gebildeten Ablagerungen, z.B. bei höherlastigen Betriebszuständen des Verbrennungsmotors. Die hohe Temperaturbelastung des AGR-Ventils führt jedoch ebenfalls zu starken Belastungen des Aktuators. Auch nach der Abkühlung des rückgeführten Abgases im Zylinderkopf durch das Motorkühlmittel Aktuator und AGR-Ventil noch stark belastet.

Aus der unveröffentlichten DE 102 005 029 322.0 der Anmelderin ist ein AGR-Ventil sowie eine Anordnung zur Rückführung und Kühlung von Abgas einer Brennkraftmaschine mit einem AGR-Ventil bekannt. Die Ventileinrichtung ist in einem Ausführungsbeispiel dabei zuströmseitig eines Hochtemperaturkühlers oder in einem anderen Ausführungsbeispiel abströmseitig der Abgaskühler angeordnet.

Ferner ist in der ebenfalls noch unveröffentlichten DE 102 005 048 911.7 der Anmelderin eine Anordnung zur Rückführung und Kühlung von Abgas einer Brennkraftmaschine offenbart, wobei ein AGR-Ventil abströmseitig eines Abgaskühlers angeordnet ist. In der ebenfalls noch unveröffentlichten DE 102 005 049 309.2 der Anmelderin ist ein AGR-Ventil, insbesondere mit einem Oxidationskatalysator, zuströmseitig eines Abgaskühlers offenbart.

In der unveröffentlichten DE 102 005 044 088.6 der Anmelderin ist die Integration eines AGR-Ventils in den Eintrittsdiffusor eines Wärmetauschers, insbesondere eines Abgaswäremtauschers, offenbart.

Aus der EP 1 355 057 A2 ist ein Abgasrückführventil mit umlaufenden Kühlkanal bekannt. Die US 3 267 954 beschreibt die Verwendung von Blenden zur Beeinflussung der Strömung in einem Kühlkanal.

Es ist Aufgabe der vorliegenden Erfindung, ein Ventil der eingangs genannten Art zu verbessern.

Die Aufgabe wird durch die Merkmale des Anspruchs 1 gelöst.

Weitere vorteilhafte Ausgestaltungen der Erfindung ergeben sich aus den Unteransprüchen und aus der Zeichnung.

Es wird ein Ventil zur Regelung eines Abgasstroms eines Verbrennungsmotors vorgeschlagen, das zumindest ein Verschlusselement und zumindest einen Aktuator zur Betätigung des Verschlusselements aufweist, wobei das Ventil zumindest einen Wärmeübertragungskanal zur Ventilkühlung aufweist, der mit zumindest einem ersten Medium durchströmbar ist.

Das zumindest eine Verschlusselement kann insbesondere einen Massenstrom eines zweiten Mediums, wie beispielsweise Abgas, steuern oder regeln. Die Betätigung des Verschlusselements kann über einen Aktuator erfolgen. Das Ventil weist zumindest einen Wärmeübertragungskanal zur Ventilkühlung auf, der mit zumindest einem Medium, insbesondere Kühlmittel, wie Kühlflüssigkeit oder Luft, durchströmbar ist bzw. durchströmt werden kann bzw. durchströmt wird.

Der Wärmeübertragungskanal ist als Ringkanal ausgebildet. Das erste Medium, insbesondere Kühlflüssigkeit oder Luft, kann dabei besonders vorteilhaft von einer Einlassöffnung zu einer Auslassöffnung strömen.

Ferner weist der Wärmeübertragungskanal zumindest eine Wandpaarung auf, deren Wände zueinander konzentrisch ausgebildet sind. Auf diese Weise kann der Strömungskanal besonders vorteilhaft beispielsweise in eine Platte durch ein urformendes Fertigungsverfahren, wie beispielsweise Spritzgießen, oder durch ein abtragendes Fertigungsverfahren, wie beispielsweise Fräsen, eingebracht werden.

Das Ventil weist zumindest eine erste Öffnung für den Zufluss des ersten Mediums und zumindest eine zweite Öffnung für den Abfluss des ersten Mediums auf. Auf diese Weise ist der Wärmeübertragungskanal besonders vorteilhaft mit dem ersten Medium über die erste Öffnung beströmbar und das erste Medium kann nach Durchströmen des Wärmeübertragungskanals besonders vorteilhaft aus der zweiten Öffnung wieder abströmen.

Ferner kann vorgesehen sein, dass das erste Medium Kühlmittel, insbesondere eine Kühlflüssigkeit oder Luft, ist. Auf diese Weise ist das Ventil besonders vorteilhaft kühlbar.

Weiterhin weist das Ventil zumindest eine Platte auf, in der der Wärmeübertragungskanal angeordnet ist. Auf diese Weise kann der Wärmeübertragungskanal besonders vorteilhaft in die Platte beispielsweise durch ein urformendes Fertigungsverfahren, wie Spritzgießen, oder durch ein abtragendes Fertigungsverfahren, wie Fräsen oder Bohren, eingebracht und mit dem Ventil besonders vorteilhaft verbunden werden.

Die Platte weist Versteifungseinrichtungen und Hohlräume zur Gewichtseinsparung auf. Auf diese Weise kann die Platte besonders leicht ausgebildet werden.

Ferner kann vorgesehen sein, dass die Platte mit einem Ventilgehäuse stoffschlüssig und/oder formschlüssig verbunden ist. Auf diese Weise kann die Platte mit dem Ventilgehäuse besonders vorteilhaft beispielsweise durch Löten, Schweißen, Kleben usw. und/oder besonders vorteilhaft formschlüssig verbunden werden.

In einer weiteren vorteilhaften Fortbildung ist die Platte einteilig mit dem Ventilgehäuse ausgebildet. Auf diese Weise können Montageprozesse besonders vorteilhaft eingespart werden.

Ferner kann vorgesehen sein, dass die Platte zumindest eine erste Flanschfläche zur Befestigung aufweist. An dieser Flanschfläche können besonders vorteilhaft andere Bauteile wie beispielsweise ein Eintrittsdiffusor und so weiter befestigt werden.

In dem Wärmeübertragungskanal ist zumindest eine Blende zur Verhinderung der Umströmung des Wärmeübertragungskanals angeordnet. Auf diese Weise kann besonders vorteilhaft verhindert werden, dass erstes Medium, wie beispielsweise Kühlmittel oder Luft, von der ersten Öffnung, insbesondere der Eintrittsöffnung, direkt zur zweiten Öffnung, insbesondere zur Austrittsöffnung, strömt und dabei nicht durch den Wärmeübertragungskanal strömt, wodurch das Ventilelement nicht entsprechend gekühlt würde.

Weiterhin kann besonders bevorzugt vorgesehen werden, dass das Ventil zumindest ein Dichtelement, insbesondere eine Flachdichtung, zur Abdichtung aufweist. Auf diese Weise kann besonders vorteilhaft verhindert werden, dass Medien, wie beispielsweise das erste Medium, aus dem Ventil austritt und/oder andere Medien in das Ventil eintreten.

Erfindungsgemäß wird ferner ein Wärmetauscher zur Abgaskühlung mit zumindest einem Ventil nach einem der Ansprüche 1 bis 6 vorgeschlagen.

In einer besonders bevorzugten Ausbildung weist der Wärmetauscher einen ersten Strömungskanal auf, der mit dem ersten Medium und/oder mit einem zweiten Medium durchströmbar ist. Auf diese Weise kann der Wärmetauscher besonders vorteilhaft mit dem ersten Medium, welches insbesondere zuvor das Ventil durchströmt hat, durchströmt werden und/oder mit einem zweiten Medium durchströmt werden.

Weiterhin kann besonders bevorzugt vorgesehen werden, dass der Wärmetauscher einen zweiten Strömungskanal aufweist, der mit einem dritten Medium durchströmbar ist. Auf diese Weise kann der Wärmetauscher, insbesondere der Abgaswärmetauscher, besonders vorteilhaft mit dem dritten Medium, wie beispielsweise Abgas, durchströmt werden.

Ferner kann vorgesehen sein, dass das zweite Medium eine Kühlflüssigkeit oder Luft und/oder das dritte Medium Abgas ist. Auf diese Weise kann das dritte Medium, insbesondere Abgas, vom zweiten Medium, insbesondere der Kühlflüssigkeit oder der Luft, besonders vorteilhaft gekühlt werden.

In einer vorteilhaften Weiterbildung weist der Wärmetauscher einen Eintrittsdiffusor für das dritte Medium auf. Auf diese Weise kann der Wärmetauscher über den Eintrittsdiffusor besonders vorteilhaft mit dem dritten Medium beströmt werden.

Ferner kann vorgesehen sein, dass der Eintrittsdiffusor eine zweite Flanschfläche aufweist, die mit der ersten Flanschfläche des Ventils verbindbar ist. Auf diese Weise kann das Ventil mit dem Wärmetauscher besonders vorteilhaft verbunden werden.

Weiterhin kann besonders bevorzugt vorgesehen werden, dass das Dichtelement zur Abdichtung des Ventils gegenüber dem Eintrittsdiffusor zwischen der ersten Flanschfläche und der zweiten Flanschfläche angeordnet ist. Auf diese Weise kann das Ventil gegenüber dem Eintrittsdiffusor besonders vorteilhaft abgedichtet werden bzw. der Eintrittsdiffusor kann besonders vorteilhaft gegenüber dem Dichtelement abgedichtet werden.

In einer weiteren vorteilhaften Ausgestaltung weist der Wärmetauscher zumindest eine Bypassklappe zum Bypass von drittem Medium um den Wärmetauscher auf. Auf diese Weise kann besonders vorteilhaft drittes Medium, wie beispielsweise Abgas, nicht durch den Wärmetauscher, insbesondere den Abgaswärmetauscher geleitet, sondern um diesen herum geleitet werden, so dass besonders vorteilhaft Abgas nicht gekühlt werden kann.

Eine weitere vorteilhafte Ausführung ist dadurch gekennzeichnet, dass die zumindest eine Bypassklappe mittels eines zweiten Aktuators betätigbar ist. Auf diese Weise kann die Bypassklappe besonders vorteilhaft von einem elektrischen oder pneumatischen oder hydraulischen Aktuator betätigt werden.

Ferner kann vorgesehen sein, dass die zumindest eine Bypassklappe und/oder das Ventil im oder benachbart zum Eintrittsdiffusor angeordnet sind. Auf diese Weise kann Bauraum besonders vorteilhaft eingespart werden.

Erfindungsgemäß wird ferner ein System mit zumindest einem Ventil nach einem der Ansprüche 1 bis 6 und mit zumindest einem Wärmetauscher nach einem der Ansprüche 7 bis 9 vorgeschlagen, das zumindest einen Verbrennungsmotor für ein Fahrzeug sowie zumindest eine erste Turbine eines Abgasturboladers aufweist, wobei das Ventil zuströmseitig des Wärmetauschers und der Wärmetauscher auf der Hochdruckseite der ersten Turbine angeordnet ist. Auf diese Weise können der zumindest eine Wärmetauscher, insbesondere der Abgaswärmetauscher, und das Ventil besonders vorteilhaft auf der Hochdruckseite angeordnet sein, so dass die Abgasrückführung besonders vorteilhaft auf der Hochdruckseite erfolgen kann.

Erfindungsgemäß wird ferner ein weiteres System mit zumindest einem Ventil nach einem der Ansprüche 1 bis 6 und mit zumindest einem Wärmetauscher nach einem der Ansprüche 7 bis 9 vorgeschlagen, das zumindest einen Verbrennungsmotor für ein Fahrzeug sowie zumindest eine erste Turbine eines Abgasturboladers aufweist, wobei das Ventil zuströmseitig des Wärmetauschers und der Wärmetauscher auf der Niederdruckseite der Turbine angeordnet ist. Auf diese Weise können der zumindest eine Wärmetauscher, insbesondere der Abgaswärmetauscher, und das Ventil besonders vorteilhaft auf der Niederdruckseite der Turbine angeordnet sein, so dass die Abgaskühlung besonders vorteilhaft auf der Niederdruckseite erfolgen kann.

Weiterhin kann besonders bevorzugt vorgesehen werden, dass das System mindestens einen zweiten Wärmetauscher zur Ladeluftkühlung aufweist und/oder die erste Turbine einen Kompressor zur Ladeluftaufladung antreibt. Auf diese Weise kann die Ladeluft im zweiten Wärmetauscher besonders vorteilhaft gekühlt werden und/oder die Ladeluft kann durch den Kompressor besonders vorteilhaft komprimiert werden.

Ferner kann vorgesehen sein, dass das System zumindest eine zweite Turbine aufweist, die zumindest einen zweiten Kompressor zur Ladeluftaufladung antreibt. Auf diese Weise kann die Ladeluft und/oder das rückgeführte Abgas besonders vorteilhaft zweistufig aufgeladen bzw. komprimiert werden. Vorteilhaft ist, dass das erste Medium Kühlmittel, insbesondere eine Kühlflüssigkeit oder Luft, ist.

Vorteilhaft ist, dass die Platte Versteifungseinrichtungen und Hohlräume zur Gewichtseinsparung aufweist.

Vorteilhaft ist, dass das Ventil zumindest ein Dichtelement, insbesondere eine Flachdichtung, zur Abdichtung aufweist.

Vorteilhaft ist, dass der Wärmetauscher einen ersten Strömungskanal aufweist, der mit dem ersten Medium und/oder mit einem zweiten Medium durchströmbar ist.

Vorteilhaft ist, dass der Wärmetauscher einen zweiten Strömungskanal aufweist, der mit einem dritten Medium durchströmbar ist.

Vorteilhaft ist, dass das zweite Medium eine Kühlflüssigkeit oder Luft und/oder das dritte Medium Abgas ist.

Vorteilhaft ist, dass der Wärmetauscher einen Eintrittsdiffusor für das dritte Medium aufweist.

Vorteilhaft ist, dass die zumindest eine Bypassklappe mittels eines zweiten Aktuators betätigbar ist.

Vorteilhaft ist ein System mit zumindest einem Ventil und mit zumindest einem Wärmetauscher aufweisend zumindest einen Verbrennungsmotor für ein Fahrzeug, zumindest eine erste Turbine eines Abgasturboladers, wobei das Ventil zuströmseitig des Wärmetauschers und der Wärmetauscher auf der Niederdruckseite der ersten Turbine angeordnet ist.

Vorteilhaft ist, dass das System mindestens einen zweiten Wärmetauscher zur Ladeluftkühlung aufweist und/oder die erste Turbine einen ersten Kompressor zur Ladeluftaufladung antreibt.

Vorteilhaft ist, dass das System zumindest eine zweite Turbine aufweist, die zumindest einen zweiten Kompressor zur Ladeluftaufladung antreibt.

Weitere vorteilhafte Ausgestaltungen der Erfindung ergeben sich aus den Unteransprüchen und aus der Zeichnung. Die Gegenstände der Unteransprüche beziehen sich sowohl auf das erfindungsgemäße Ventil zur Regelung eines Abgasstroms eines Verbrennungsmotors sowie auf den erfindungsgemäßen Wärmetauscher zur Abgaskühlung mit zumindest einem Ventil als auch auf das erfindungsgemäße System mit zumindest einem Ventil und mit zumindest einem Wärmetauscher.

Ausführungsbeispiele der Erfindung sind in der Zeichnung dargestellt und werden im Folgenden näher erläutert, wobei eine Beschränkung der Erfindung hierdurch nicht erfolgen soll. Es zeigen
- Figur 1:: eine isometrische Darstellung eines Abgaswärmetauschers mit einem kühlbaren Ventil und einer Bypassklappe,
- Figur 2:: eine isometrische Schnittdarstellung einer kühlbaren Platte eines Ventils,
- Figur 3:: eine isometrische Darstellung einer kühlbaren Platte eines Ventils,
- Figur 4:: eine isometrische Darstellung einer kühlbaren Platte eines Ventils mit einem Dichtelement,
- Figur 5:: eine isometrische Darstellung der Bypassklappe mit einem Aktuator,
- Figur 6:: eine Schnittdarstellung A-A durch die Bypassklappe,
- Figur 7:: eine schematische Darstellung eines Systems mit einem Abgaswärmetauscher und einem kühlbaren Ventil auf der Hochdruckseite mit einstufiger Aufladung,
- Figur 8:: eine schematische Darstellung eines Systems mit einem Abgaswärmetauscher und einem kühlbaren Ventil auf der Hochdruckseite mit zweistufiger Aufladung,
- Figur 9:: eine schematische Darstellung eines Systems mit einem Abgaswärmetauscher und einem kühlbaren Ventil auf der Niederdruckseite mit einstufiger Aufladung und
- Figur 10:: eine schematische Darstellung eines Systems mit einem Abgaswärmetauscher und einem kühlbaren Ventil auf der Niederdruckseite mit zweistufiger Aufladung.

Die Merkmale der verschiedenen Ausführungsbeispiele sind beliebig miteinander kombinierbar. Die Erfindung ist auch für andere als die gezeigten Gebiete einsetzbar.

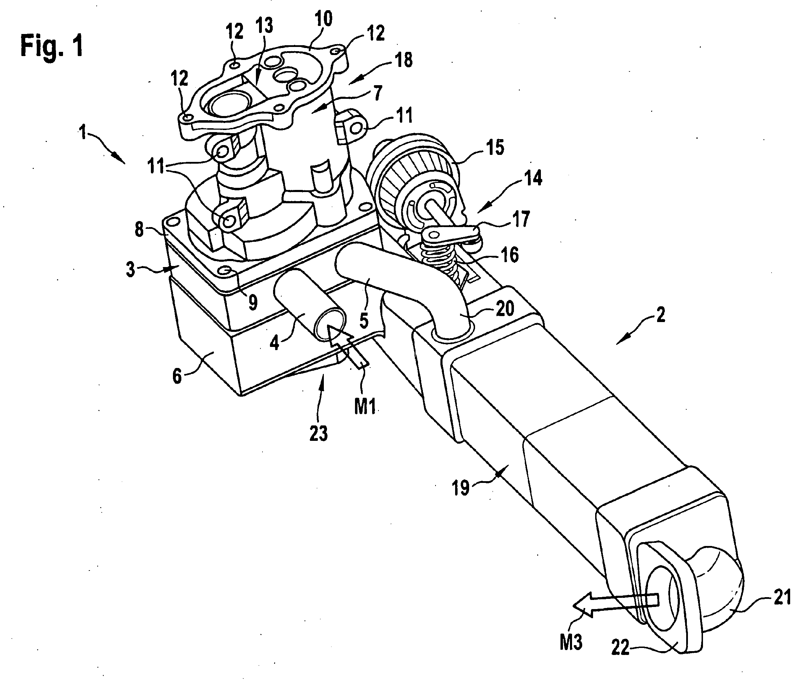

**Figur 1** zeigt eine isometrische Darstellung eines Abgaswärmetauschers 2 mit einem kühlbaren Ventil 1 und einer Bypassklappe 14.

Das Ventil 1 weist zumindest ein Ventilgehäuse 7 sowie zumindest eine Platte 3, insbesondere Kühlplatte 3, auf. Das Ventilgehäuse 7 weist einen Ventilgehäuseflansch 8 auf, der im Wesentlichen als rechteckförmige Platte ausgebildet ist. Die Ecken der Platte sind im dargestellten Ausführungsbeispiel abgerundet und benachbart zu den nicht näher bezeichneten Ecken des Ventilgehäuseflanschs 8 ist jeweils eine Ventilgehäuseflanschbohrung 9 eingebracht. Im dargestellten Ausführungsbeispiel sind im Ventilgehäuseflansch 8 vier Ventilgehäuseflanschbohrungen 9 eingebracht. In einem anderen Ausführungsbeispiel sind in den Ventilgehäuseflansch ein bis vier oder mehr als vier Ventilgehäuseflanschbohrungen 9 eingebracht. Die Ventilgehäuseflanschbohrung kann dabei als zylindrische Bohrung oder als Stufenbohrung oder als quaderförmige Öffnung oder als ovale bzw. zylindrische Bohrung oder als Bohrung aus der Kombination der zuvor genannten Formen ausgebildet sein. In einem anderen Ausführungsbeispiel ist der Ventilgehäuseflansch 8 als runde, insbesondere kreisförmige oder ovale Platte oder beispielsweise als sternförmige Platte ausgebildet. Der Ventilgehäuseflansch 8 kann auch als Platte ausgebildet sein, die eine Kombination von eckigen, quadratischen oder rechteckigen und/oder runden bzw. ovalen Formen sein kann.

Im dargestellten Ausführungsbeispiel ist das Ventilgehäuse 7 aus dem Ventilgehäuseflansch 8 ausgebildet. Das Ventilgehäuse 7 ist im Wesentlichen als Zylinderabschnittsfläche ausgebildet, aus der eine Anzahl von weiteren Zylinderabschnittsflächen und Zylindern unterschiedlicher Form und Größe an unterschiedlichen Stellen ausgebildet ist. Aus dem Ventilgehäuse 7 ist ferner ein Ventilgehäuseanschlussflansch 10 ausgebildet. Der Ventilgehäuseanschlussflansch weist eine Ventilgehäuseanschlussflanschöffnung 13 auf. Die Ventilgehäuseanschlussflanschöffnung 13 ist im Wesentlichen als rechteckige Fläche mit sich anschließenden kreisförmigen Segmenten ausgebildet. In einem anderen Ausführungsbeispiel kann die Ventilgehäuseanschlussflanschöffnung 13 als rechteckige oder quadratische und/oder kreisförmige bzw. kreissegmentförmige und/oder ellipsenförmige Öffnung ausgebildet sein. Der Ventilgehäuseanschlussflansch 10 weist einen nicht näher bezeichneten Rahmen auf, wobei der Rahmen im dargestellten Ausführungsbeispiel ein Rahmen mit Kreis- bzw. Bogensegmenten ist. In einem anderen Ausführungsbeispiel kann der nicht näher bezeichnete Rahmen rechteckförmig oder aus rechteckförmigen Elementen und bogenförmigen Elementen ausgebildet sein. Aus dem Rahmen sind im dargestellten Ausführungsbeispiel Zylinderabschnitte ausgebildet, die jeweils eine Ventilgehäuseanschlussflanschbohrung 12 aufweisen. Durch die Ventilgehäuseanschlussflanschbohrungen 12 können beispielsweise Verbindungselemente, wie Schrauben, durchgesteckt werden. An dem Ventilgehäuseanschlussflansch 10 können andere Bauteile, wie beispielsweise ein Aktuator oder andere Ventilelemente, formflüssig beispielsweise durch Verschrauben und/oder stoffschlüssig beispielsweise durch Verlöten, Verschweißen, Verkleben usw. mit dem Ventilgehäuse verbunden werden.

Im dargestellten Ausführungsbeispiel weist der Ventilgehäuseanschlussflansch 10 vier Ventilgehäuseanschlussflanschbohrungen 12 auf. In einem anderen Ausführungsbeispiel weist der Ventilgehäuseanschlussflansch 10 ein bis vier oder mehr als vier Ventilgehäuseanschlussflanschbohrungen 12 auf.

Aus dem Ventilgehäuse 7 sind Ventilgehäusebefestigungsösen 11 ausgebildet. Im dargestellten Ausführungsbeispiel sind drei Ventilgehäusebefestigungsösen 11 aus dem Ventilgehäuse 7 ausgebildet. In einem anderen Ausführungsbeispiel können ein bis drei oder mehr als drei Ventilgehäusebefestigungsösen aus dem Ventilgehäuse 7 ausgebildet sein. Im dargestellten Ausführungsbeispiel sind die Ventilgehäusebefestigungsösen 11 einteilig mit dem Ventilgehäuse 7 ausgebildet. Ebenso sind der Ventilgehäuseanschlussflansch 10 und/oder der Ventilgehäuseflansch 8 im dargestellten Ausführungsbeispiel einteilig mit dem Ventilgehäuse 7 ausgebildet.

In einem anderen Ausführungsbeispiel kann der Ventilgehäuseflansch 8 und/oder der Ventilgehäuseanschlussflansch 10 und/oder die Ventilgehäusebefestigungsösen 11 mit dem Ventilgehäuse 7 stoffschlüssig beispielsweise durch Schweißen, Löten, Kleben usw. verbunden werden. Im dargestellten Ausführungsbeispiel sind das Ventilgehäuse und/oder der Ventilgehäuseflansch 8 und/oder der Ventilgehäuseanschlussflansch 10 und/oder die Ventilgehäusebefestigungsösen 11 mittels eines urformenden Fertigungsverfahrens, wie beispielsweise Spritzgießen, hergestellt.

In einem anderen Ausführungsbeispiel sind das Ventilgehäuse 7 und/oder der Ventilgehäuseflansch 8 und/oder der Ventilgehäuseanschlussflansch 10 und/oder die Ventilgehäusebefestigungsösen 11 mittels eines abtragenden Fertigungsverfahrens, wie beispielsweise Fräsen oder Drehen oder Bohren, ausgebildet. Das Ventilgehäuse 7 und/oder der Ventilgehäuseflansch 8 und/oder der Ventilgehäuseanschlussflansch 10 und/oder die Ventilgehäusebefestigungsösen 11 können aus Metall, wie beispielsweise aus Stahl, Edelstahl oder Aluminium oder aus einem anderen Metall oder aus Keramik oder aus Kunststoff oder aus einem Faserverbundwerkstoff ausgebildet sein. Der Ventilgehäuseflansch 8 ist mit der Platte 3, insbesondere mit der Kühlplatte 3 formschlüssig beispielsweise durch Verschrauben, und/oder stoffschlüssig beispielsweise durch Verlöten, Verschweißen, Kleben usw. verbunden. Die Platte 3, insbesondere die Kühlplatte 3, ist im Wesentlichen parallel zum Ventilgehäuseflansch 8 angeordnet. Im dargestellten Ausführungsbeispiel ist die Platte 3 als rechteckige Platte mit abgerundeten Ecken, insbesondere mit vier nicht näher bezeichneten Ecken, ausgebildet. Die Platte 3 kann aber auch als kreisförmige bzw. zylindrische und/oder ovale und/oder aus einer Kombination von rechteckigen und zylinderförmigen und/oder ovalen bzw. runden Elementen ausgebildet sein. Der Zufluss 4 ist im dargestellten Ausführungsbeispiel als zylinderförmiges Rohr ausgebildet.

In einem anderen Ausführungsbeispiel kann der Zufluss 4 als Rohr mit einem quadratischen oder rechteckigen oder mehreckigen Querschnitt ausgebildet sein.

Im dargestellten Ausführungsbeispiel ist Zufluss 4 einteilig mit der Platte 3 ausgebildet. In einem anderen Ausführungsbeispiel kann der Zufluss 4 mit der Platte 3 stoffschlüssig beispielsweise durch Schweißen, Löten, Kleben usw. und/oder formschlüssig verbunden sein. Der Abfluss 5 ist im Wesentlichen als Rohr ausgebildet.

Im dargestellten Ausführungsbeispiel weist das Rohr einen kreisförmigen Querschnitt auf. In einem anderen Ausführungsbeispiel kann das Rohr einen rechteckigen oder quadratischen oder mehreckigen Querschnitt oder einen Querschnitt aus rechteckigen und runden und/oder ovalen Elementen aufweisen. Im dargestellten Ausführungsbeispiel ist der Abfluss 5 einteilig mit der Platte 3 ausgebildet. In einem anderen Ausführungsbeispiel kann der Abfluss 5 mit der Platte 3 stoffschlüssig, beispielsweise durch Löten, Schweißen, Kleben usw., und/oder formschlüssig verbunden sein. Im dargestellten Ausführungsbeispiel ist der Abfluss 5 mit dem Kühlmedieneintritt 20 des Wärmetauschers 2, insbesondere des Abgaswärmetauschers, verbunden. In einem anderen Ausführungsbeispiel ist der Abfluss 5 nicht mit dem Wärmetauscher 2, insbesondere mit dem Abgaswärmetauscher, verbunden. Benachbart zu der Platte 3 ist also zum einen der Ventilgehäuseflansch 8 des Ventilgehäuses 7 angeordnet. Auf der anderen gegenüberliegenden Seite ist benachbart zu der Platte 3 ein Eintrittsdiffusor 6 für den Eintritt des dritten Mediums, insbesondere des Abgases in den Wärmetauscher 2, insbesondere in den Abgaswärmetauscher, angeordnet. Der Eintrittsdiffusor ist mit einem Wärmetauschereintrittsdiffusorflansch 23 strömungsmäßig verbunden. Im dargestellten Ausführungsbeispiel ist der Wärmetauschereintrittsdiffusorflansch 23 einteilig mit dem Eintrittsdiffusor 6 ausgebildet. In einem anderen Ausführungsbeispiel ist der Wärmetauschereintrittsdiffusorflansch 23 stoffschlüssig, insbesondere durch Schweißen, Löten, Kleben usw., und/oder formschlüssig mit dem Eintrittsdiffusor 6 verbunden.

Der Wärmetauschereintrittsdiffusorflansch 23 ist im dargestellten Ausführungsbeispiel als parallelogrammförmige Platte mit einer nicht dargestellten Eintrittsöffnung. Die Ecken des Parallelogramms sind im Wesentlichen abgerundet. Der Eintrittsdiffusor 6 ist im dargestellten Ausführungsbeispiel aus Edelstahl oder aus einem anderen Stahl ausgebildet. In einem anderen Ausführungsbeispiel kann der Eintrittsdiffusor 6 aus einem Metall mit geringer Dichte, wie beispielsweise aus Aluminium oder aus Keramik oder aus einem insbesondere wärmebeständigen Kunststoff oder aus einem Faserverbundwerkstoff ausgebildet sein.

Im dargestellten Ausführungsbeispiel ist der Eintrittsdiffusor 6 als Quader mit mindestens einem Hohlraum im Inneren sowie mit mindestens einer nicht dargestellten Öffnung für den Eintritt des dritten Mediums, insbesondere des Abgases, ausgebildet. In einem anderen Ausführungsbeispiel ist der Eintrittsdiffusor beispielsweise als Pyramide, insbesondere als vierseitige oder dreiseitige Pyramide ausgebildet. In einem anderen weiteren Ausführungsbeispiel kann der Eintrittsdiffusor 6 als Zylinder mit einer kreisförmigen oder ellipsenförmigen Querschnittsfläche ausgebildet sein. In einem anderen Ausführungsbeispiel kann der Eintrittsdiffusor aus Quader- und/oder Zylinder-und/oder Pyramidenelementen ausgebildet sein.

Die Platte 3, insbesondere die Kühlplatte, ist im dargestellten Ausführungsbeispiel aus einem Stahl, insbesondere aus Edelstahl, ausgebildet. In einem anderen Ausführungsbeispiel kann die Platte 3 aus Keramik oder aus einem wärmebeständigen Kunststoff oder aus einem Faserverbundwerkstoff oder aus einem Metall mit geringer Dichte, wie beispielsweise aus Aluminium, ausgebildet sein.

Der Wärmetauscher 2 ist insbesondere ein Abgaswärmetauscher. In einem anderen Ausführungsbeispiel kann der Wärmetauscher 2 ein Kühlmittelkühler und/oder ein Ölkühler und/oder ein Ladeluftkühler und/oder ein Kondensator für eine Klimaanlage und/oder ein Gaskühler für eine Klimaanlage und/oder ein Verdampfer für eine Klimaanlage sein.

Im dargestellten Ausführungsbeispiel ist der Wärmetauscher 2, insbesondere der Abgaswärmetauscher, aus Metall, wie beispielsweise aus einem Stahl, insbesondere aus Edelstahl, und/oder aus einem Metall mit geringer Dichte, wie beispielsweise aus Aluminium und/oder aus einem Kunststoff, insbesondere aus einem wärmebeständigen Kunststoff, und/oder aus Keramik und/oder aus einem Faserverbundwerkstoff ausgebildet.

Der Wärmetauscher 2, insbesondere der Abgaswärmetauscher, weist zumindest ein Wärmetauschergehäuse 19 auf. Im dargestellten Ausführungsbeispiel ist das Wärmetauschergehäuse 19 aus einem ersten Quader ausgebildet. Der Quader weist im Wesentlichen eine quadratische Querschnittsfläche auf. Auf zwei einander gegenüberliegenden Seiten des Quaders sind aus dem Quader jeweils ein weiterer Quader mit einer größeren Querschnittsfläche als der des ersten Quaders, der sich in der Mitte zwischen den zwei äußeren Quadern befindet, ausgebildet. Der Übergang des ersten, sich in der Mitte befindlichen Quaders, zum jeweils sich anschließenden äußeren Quaders ist als runder Übergang ausgebildet. In einem anderen Ausführungsbeispiel kann dieser Übergang auch eckig, wie beispielsweise als Schulter, ausgebildet sein. Im dargestellten Ausführungsbeispiel sind der erste Quader und die sich außen anschließenden weiteren Quader einteilig ausgebildet. In einem anderen Ausführungsbeispiel können die sich jeweils außen anschließenden Quader formschlüssig und/oder stoffschlüssig, insbesondere durch Schweißen, Löten, Kleben usw., verbunden sein.

In einem anderen Ausführungsbeispiel ist das Wärmetauschergehäuse 19 als Zylinder oder aus einer Vielzahl von Zylinderelementen zusammengesetzt. Ferner kann in einer anderen Ausbildung das Wärmetauschergehäuse 19 als pyramidenförmige Form, wie beispielsweise eine dreiseitige oder eine vierseitige oder eine mehrseitige Pyramide, ausgebildet sein. Ferner kann das Wärmetauschergehäuse 19 in einer weiteren Ausbildung aus kegelförmigen Segmenten bzw. kegelstumpfförmigen Segmenten ausgebildet sein. In einer weiteren Ausbildung kann das Wärmetauschergehäuse 19 aus Quaderelementen und/oder Pyramidenelementen und/oder Zylinderelementen und/oder Kegel- bzw. Kegelstumpfelementen ausgebildet sein.

Der Wärmetauscher 2, insbesondere der Abgaswärmetauscher, weist in seinem Inneren eine Anzahl von Rohren, insbesondere eine Anzahl von Flachrohren auf, durch die das dritte Medium, insbesondere das Abgas, strömt und die mit einem nicht dargestellten mindestens ersten Boden, insbesondere mit zwei Böden, verbunden sind. Die Verbindung ist formschlüssig, insbesondere durch Aufweiten oder Verkrimpen oder Falzen bzw. Bördeln und/oder stoffschlüssig, beispielsweise durch Schweißen, Löten, Kleben usw. Im dargestellten Ausführungsbeispiel sind die nicht dargestellten Rohre, insbesondere Flachrohre, aus Metall, wie beispielsweise aus Stahl, insbesondere aus Edelstahl, oder aus einem anderen Metall, wie beispielsweise einem Metall mit einer geringen Dichte wie Aluminium, oder aus einem Faserverbundwerkstoff bzw. aus einem wärmebeständigen Kunststoff ausgebildet. Die Flachrohre weisen eine Vielzahl von turbulenzerzeugenden Elementen, wie beispielsweise Winglets oder andere Ausprägungen, auf. Diese turbulenzerzeugenden Elemente können beispielsweise in die Flachrohre durch ein umformendes Fertigungsverfahren, wie beispielsweise Prägen, Stanzen, Pressen usw., oder durch ein urformendes Fertigungsverfahren hergestellt werden. Ferner können auch Turbulenzeinlagen, wie beispielsweise Turbulenzbleche in die Flachrohre bzw. zwischen Flachrohren eingebracht sein.

Die nicht bezeichneten Böden sind mit dem Wärmetauschergehäuse 19 beispielsweise durch Formschluss, wie beispielsweise Falzen, Bördeln, Verkrimpen usw., und/oder durch Stoffschluss, wie beispielsweise Schweißen, Löten, Kleben usw., verbunden. In einem anderen Ausführungsbeispiel strömt das dritte Medium, insbesondere das Abgas, zwischen Platten, die übereinander stapelbar sind bzw. übereinander gestapelt sind. Zwischen diesen Platten können beispielsweise turbulenzerzeugende Elemente, wie Turbulenzbleche, eingelegt sein, die zu einer Verwirbelung der Strömung und somit zu einem besseren Wärmeübergang bzw. zu einer besseren Wärmeübertragung führen. Die Platten können beispielsweise stoffschlüssig durch Schweißen, Löten, Kleben usw. und/oder formschlüssig durch Verkrimpen bzw. Falzen miteinander verbunden sein.

Benachbart zum Wärmetauscher 2 und/oder benachbart zum Ventil 1 und/oder benachbart zum Eintrittsdiffusor 6 ist zumindest eine Bypassklappe 14 angeordnet.

Die Bypassklappe 14 weist ein nicht dargestelltes Klappenelement auf, das über einen Bypassklappenaktuator 15 betätigbar ist bzw. betätigt wird bzw. betätigt werden kann. Über eine Bypassklappenhebevorrichtung 17, die mittels eines Bypassklappenaktuators 15 betätigbar ist bzw. betätigt wird, wird das Bypassklappenelement zwischen mehreren Positionen verstellt bzw. kann mehrere Positionen einnehmen. Die Bypassklappenhebevorrichtung 17 weist zumindest ein Bypassklappenfederelement 16 auf. Im dargestellten Ausführungsbeispiel ist das Bypassklappenfederelement 16 als Spiralfeder ausgebildet. In einem anderen Ausführungsbeispiel kann das Bypassklappenfederelement 16 als anderes Federelement, wie beispielsweise als Blattfederelement usw., ausgebildet sein.

Im dargestellten Ausführungsbeispiel ist die Bypassklappe 14 in den Eintrittsdiffusor 6 und/oder in den Wärmetauscher 2, insbesondere in den Abgaswärmetauscher, integriert. In einem anderen Ausführungsbeispiel kann die Bypassklappe 14 als selbstständige Anbaueinheit benachbart zum Wärmetauscher 2 und/oder zum Eintrittsdiffusor 6 ausgebildet sein und/oder mit dem Wärmetauscher 2, insbesondere dem Abgaswärmetauscher, und/oder mit dem Eintrittsdiffusor 6 stoffschlüssig, beispielsweise durch Schweißen, Löten, Kleben usw., und/oder formschlüssig verbunden sein.

Der Wärmetauscher 2, insbesondere der Abgaswärmetauscher weist im dargestellten Ausführungsbeispiel in einem der äußeren Quader einen Kühlmedieneintritt 20 auf. Durch diesen Kühlmedieneintritt 20 kann Kühlmedium, wie beispielsweise Kühlmittel, insbesondere wasserhaltiges Kühlmittel, oder Luft in den Wärmetauscher 2 einströmen, diesen Wärmetauscher 2, insbesondere den Abgaswärmetauscher, durchströmen und dabei das dritte Medium, insbesondere das Abgas kühlen. Das zweite Medium, insbesondere das Kühlmedium, insbesondere das wasserhaltige Kühlmittel oder die Luft, umströmen dabei die Flachrohre bzw. die Platten, zwischen denen das dritte Medium, insbesondere das Abgas, strömt. Das zweite Medium, insbesondere das Kühlmedium strömt dabei in mindestens einem nicht dargestellten Strömungskanal zwischen dem Wärmetauschergehäuse 19, insbesondere der Wärmetauschergehäusewand, und den Flachrohren bzw. den Platten. Eingebrachte turbulenzerzeugende Elemente, wie beispielsweise Ausprägungen, Noppen, Winglets oder Turbulenzbleche verbessern dabei den Wärmeübergang. Das zweite Medium, insbesondere das Kühlmittel verlässt den Wärmetauscher 2, insbesondere den Abgaswärmetauscher durch eine nicht dargestellte Austrittsöffnung, die sich auf der Unterseite des Wärmetauschergehäuses 19 befindet, die in der Figur 1 nicht sichtbar ist. Der Kühlmedienaustritt erfolgt im dargestellten Ausführungsbeispiel aus dem äußeren Quader, der sich benachbart zum Wärmetauscheraustrittsdiffusor 21 befindet. In einem anderen Ausführungsbeispiel ist der Kühlmitteleintritt 20 an einer beliebigen Seite des äußeren Quaders oder des inneren Quaders angeordnet. Ebenso kann in einem anderen Ausführungsbeispiel der Kühlmedienaustritt des ersten oder zweiten Mediums, insbesondere des Kühlmediums, an einer beliebigen Stelle einer beliebigen Seite eines der äußeren Quader oder an einer beliebigen Stelle einer beliebigen Seite des inneren Quaders erfolgen. Im dargestellten Ausführungsbeispiel ist der Abfluss 5 des ersten Mediums, insbesondere des Kühlmediums, insbesondere der wasserhaltigen Kühlflussigkeit oder der Luft, mit dem Kühlmedieneintritt 20 des Wärmetauschers 2, insbesondere des Abgaswärmetauschers, verbunden. In einem anderen Ausführungsbeispiel ist der Abfluss 5 nicht mit dem Kühlmedieneintritt 20 verbunden. Im dargestellten Ausführungsbeispiel wird das dritte Medium, das Abgas, welches durch den Wärmetauscher 2 strömt, von dem ersten Medium M1, insbesondere dem Kühlmedium, insbesondere der wasserhaltigen Kühlflüssigkeit oder Luft, gekühlt, nachdem das erste Medium M1 über den Zufluss 4 in die Platte 3 hineinströmt, die Platte 3 durchströmt und die Platte 3 über den Abfluss 5 verlässt, durch das Rohr und den Rohrbogen in den Kühlmedieneintritt 20 des Wärmetauschers 2, insbesondere des Abgaswärmetauschers, strömt, diesen durchströmt und dabei das dritte Medium, insbesondere das Abgas, kühlt, und den Wärmetauscher 2, insbesondere den Abgaswärmetauscher aus dem nicht dargestellte Kühlmedienaustritt wieder verlässt. Das Kühlmedium 1 kann anschließend beispielsweise von einem nicht dargestellten Kühlmittelkühler gekühlt werden und anschließend dem Zufluss 4 der Platte 3, insbesondere der Kühlplatte 3 wieder zugeführt werden.

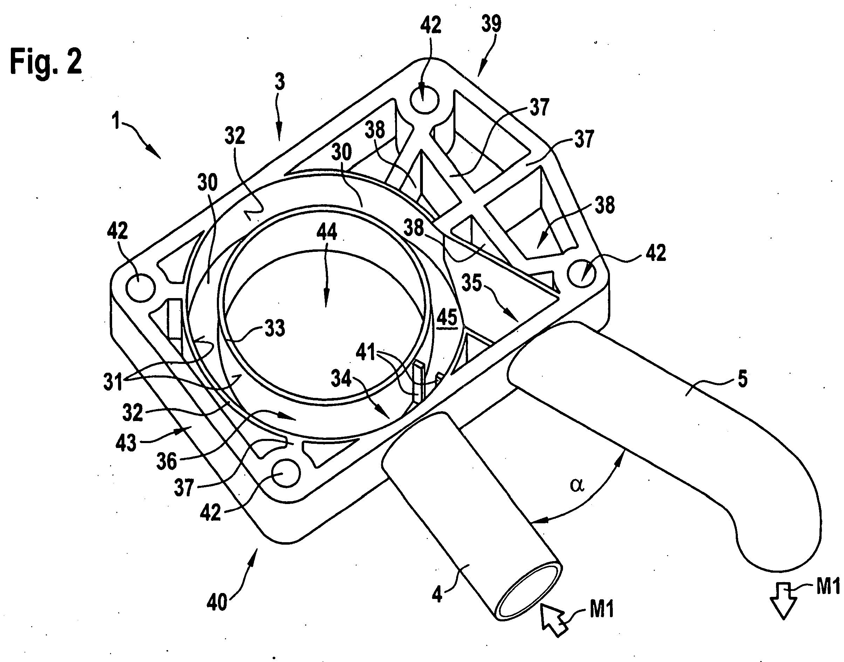

**Figur 2** zeigt eine isometrische Schnittdarstellung einer kühlbaren Platte 3 eines Ventils 1. Gleiche Merkmale sind mit den gleichen Bezugszeichen versehen, wie in Figur 1.

Die Platte 3, insbesondere die Kühlplatte, ist im dargestellten Ausführungsbeispiel aus einem Metall, wie beispielsweise Edelstahl oder aus einem anderen Stahl ausgebildet. In einem anderen Ausführungsbeispiel kann die Platte 3 aus einem Metall mit einer geringen Dichte, wie beispielsweise aus Aluminium, oder aus einem wärmebeständigen Kunststoff oder aus Keramik oder aus einem Faserverbundwerkstoff ausgebildet sein.

Die Platte 3 dient zur Kühlung des Ventils 1 und/oder einer hier nicht dargestellten Bypassplatte sowie deren Bypassplattenaktuator.

Die Platte 3 weist eine Plattenaußenwand 43 auf, die insbesondere umlaufend ausgebildet ist. Die Platte 3 ist im dargestellten Ausführungsbeispiel als fünfeckige Platte ausgebildet, deren Ecken verrundet sind. In einem anderen Ausführungsbeispiel kann die Platte 3 spitze Ecken aufweisen. In einem anderen Ausführungsbeispiel weist die Platte eine dreieckige, viereckige oder mehreckige Form auf. In einem anderen Ausführungsbeispiel weist die Platte eine eckige und/oder runde und/oder ovale Querschnittsfläche auf. Die Platte 3 kann mittels eines urformenden Fertigungsverfahren, wie beispielsweise Spritzgießen, insbesondere Metallspritzgießen, oder mittels eines abtragenden Fertigungsverfahrens hergestellt werden, wobei insbesondere Aussparungen und/oder Hohlräume und/oder Bohrungen mittels eines abtragenden Fertigungsverfahrens, wie beispielsweise Bohren, Fräsen, Erodieren usw, in die Platte eingebracht werden können.

Die Plattenaußenwand 43 ist im dargestellten Ausführungsbeispiel im Wesentlichen als Rahmenelement ausgebildet. Innerhalb dieses Rahmens weist die Platte 3 eine Wandpaarung 31 auf, die mindestens eine erste Plattenwand 32 und eine weitere zweite Plattenwand 33 aufweist. Die erste Plattenwand 32 ist im dargestellten Ausführungsbeispiel als Zylinderabschnitt ausgebildet, der eine runde Querschnittsfläche aufweist. Die zweite Plattenwand 33 ist im dargestellten Ausführungsbeispiel ebenfalls als Zylinderabschnitt mit einer kreisförmigen Querschnittsfläche ausgebildet. Die erste Plattenwand 32 weist einen größeren Querschnittsdurchmesser auf als die zweite Plattenwand 33. Zwischen der ersten Plattenwand 32 und der zweiten Plattenwand 33 ist der Ringkanal 30 ausgebildet. Der Ringkanal 30 ist eine mögliche Ausbildungsform des Wärmeübertragungskanals 36. In einem anderen Ausführungsbeispiel kann der Wärmeübertragungskanal 36 als Rechteckkanal oder als Kanal mit Sternform oder als Kanal mit einer Kombination aus bogenförmigen und rechteckigen Abschnitten ausgebildet sein. Der Wärmeübertragungskanal 36 bzw. der Ringkanal 30 wird in der Ebene der ersten Flanschfläche 40 durch den ersten Wärmeübertragungskanalboden 45 begrenzt.

Die zweite Plattenwand 33 umschließt eine Plattenbohrung 44. Die Plattenbohrung 44 ist in dargestelltem Ausführungsbeispiel als Durchgangsbohrung ausgeführt. In einem anderen Ausführungsbeispiel kann die Plattenbohrung 44 einen runden und/oder elliptischen und/oder rechteckigen und/oder mehreckigen Querschnitt aufweisen. Im dargestellten Ausführungsbeispiel ist die erste Plattenwand 32 zumindest abschnittsweise einteilig mit der Plattenaußenwand 43 ausgebildet. Die abgerundeten Ecken der Plattenaußenwand 43 weisen hohlzylinderförmige Ausbildungen auf, die Befestigungsbohrungen 42 aufweisen. Die Befestigungsbohrungen 42 können beispielsweise Gewindegänge enthalten. Sie können aber auch als Bohrungen ohne Gewinde ausgebildet sein. Im dargestellten Ausführungsbeispiel weist die Platte 3 vier dieser Ausbildungen mit jeweils einer Befestigungsbohrung 42 auf. In einem anderen Ausführungsbeispiel kann die Platte 3 ein bis vier oder mehr als vier hohlzylinderförmige Ausbildungen mit jeweils einer Befestigungsbohrung 42 oder mit mehr als einer Befestigungsbohrung 42 aufweisen. Von der Plattenaußenwand 43 verlaufen zum Wärmeübertragungskanal 36 bzw. zum Ringkanal 30 Versteifungseinrichtungen 37, die als Versteifungsstreben oder Versteifungswände ausgebildet sind. Mehrere dieser Versteifungseinrichtungen 37 kreuzen sich dabei, verlaufen unter verschiedenen Winkeln zueinander und verstärken somit die Platte 3. Die Versteifungseinrichtungen 37 und/oder die Plattenaußenwand 43 umschließen Hohlräume 38, die zur Gewichtsverringerung der Platte 3 dienen. Diese Hohlräume 38 können durch urformende Fertigungsverfahren, mit dem die Platte 3 hergestellt wird, oder durch ein abtragendes Fertigungsverfahren, wie Erodieren und/oder Bohren und/oder Fräsen, in die Platte 3 eingebracht werden. Im dargestellten Ausführungsbeispiel sind die Plattenaußenwand 43 und/oder die Versteifungseinrichtungen 37 und/oder die erste Plattenwand 32 und/oder die zweite Plattenwand 33 und/oder die Blende 41 und/oder der Zufluss 4 und/oder der Abfluss 5 einteilig mit der Platte ausgebildet. In einem anderen Ausführungsbeispiel können die im vorherigen Satz genannten Elemente jedoch auch mit der Platte, beispielsweise durch ein stoffflüssiges Verfahren, wie beispielsweise Löten, Schweißen, Kleben usw., mit der Platte 3 verbunden werden.

Über den Zufluss 4 gelangt das erste Medium M1, insbesondere das Kühlmedium, wie beispielsweise das wasserhaltige Kühlmittel oder Luft in die Platte 3 bzw. in den Wärmeübertragungskanal 36 bzw. in den Ringkanal 30. Die Blende 41 ist im dargestellten Ausführungsbeispiel als zwei Vorsprünge jeweils einer von der Innenseite der ersten Plattenwand 32 in den Wärmeübertragungskanal 36 bzw. in den Ringkanal 30 ragend und der zweite Vorsprung von der Kanalinnenseite der zweiten Plattenwand 33 in den Wärmeübertragungskanal 36 bzw. in den Ringkanal 30 ragend ausgebildet. Die Blende 41 verhindert, dass das erste Medium direkt von dem Zufluss in den Abfluss 5 wieder fließt, ohne den Wärmeübertragungskanal 36 überwiegend in seiner Gänze zu durchströmen. In einem anderen Ausführungsbeispiel kann die Blende 41 auch als durchgehende Wand ausgebildet sein. Das erste Medium M1 durchströmt nach dem Eintritt über die erste Plattenöffnung 34 in den Wärmeübertragungskanal 36 bzw. den Ringkanal 30 den Wärmeübertragungskanal 36 bzw. den Ringkanal und verlässt diesen über eine zweite Plattenöffnung 35, um aus der Platte 3 über den Abfluss 5 wieder hinauszufließen. Die Platte 3 weist an ihrer Unterseite eine erste Flanschfläche 40 auf. Gegenüberliegend der ersten Flanschfläche 40 und im Wesentlichen parallel dazu weist die Platte 3 eine dritte Flanschfläche 39 auf.

Der Zufluss 4 und/oder der Abfluss 5 sind im dargestellten Ausführungsbeispiel als Rohr mit rundem Querschnitt ausgebildet. In einem anderen Ausführungsbeispiel können der Zufluss 4 und/oder der Abfluss 5 als Rohr mit elliptischem und/oder rechteckigem und/oder mehreckigem Querschnitt ausgebildet sein.

Der Zufluss 4 und der Abfluss 5 weisen einen Winkel α. Der Winkel α kann Werte zwischen 1° und 180°, insbesondere zwischen 10° und 150°, insbesondere zwischen 20° und 120°, insbesondere zwischen 30° und 100°, insbesondere zwischen 35° und 90°, insbesondere zwischen 40° und 70° annehmen.

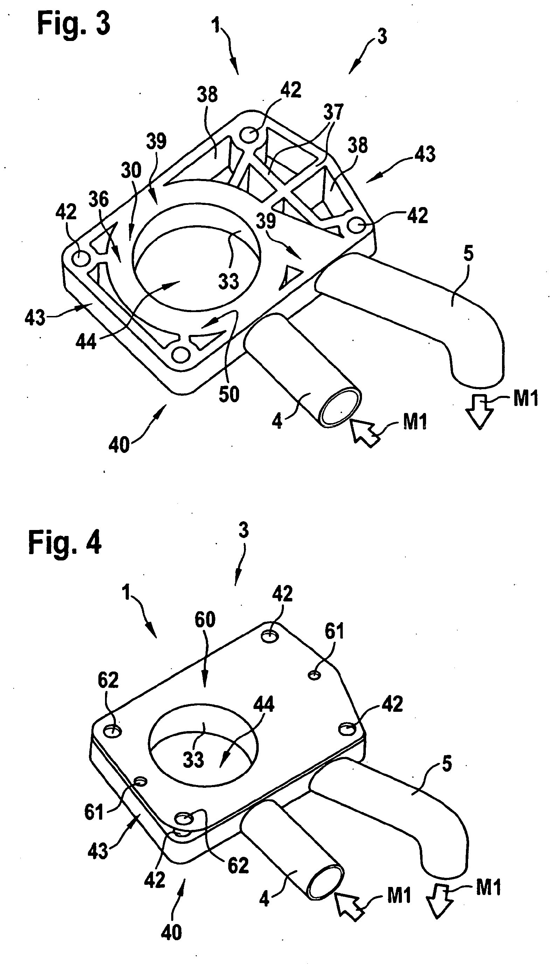

**Figur 3** zeigt eine isometrische Darstellung einer kühlbaren Platte 3 eines Ventils 1. Gleiche Merkmale sind mit den gleichen Bezugszeichen versehen, wie in den vorherigen Figuren.

Im Unterschied zu Figur 2 zeigt Figur 3 noch den zweiten Wärmeübertragungskanalboden 50. Der Wärmeübertragungskanal 36 bzw. der Ringkanal 30 wird von der nicht dargestellten ersten Plattenwand 32, der zweiten Plattenwand 33, dem nicht dargestellten ersten Wärmeübertragungskanalboden 45 und dem zweiten Wärmeübertragungskanalboden 50 zumindest abschnittsweise umschlossen.

**Figur 4** zeigt eine isometrische Darstellung einer kühlbaren Platte 3 eines Ventils 1 mit einem Dichtelement 60. Gleiche Merkmale sind mit den gleichen Bezugszeichen versehen, wie in den vorherigen Figuren.

Im Unterschied zu Figur 3 zeigt Figur 4 die Platte 3, insbesondere die Kühlplatte, mit einem Dichtelement 60, das im Wesentlichen parallel und/oder benachbart zur dritten Flanschfläche 39 angeordnet ist. Das Dichtelement 60 ist aus Gummi oder aus einem anderen Kunststoff, insbesondere aus einem Elastomer, ausgebildet. Das Dichtelement 60 ist im dargestellten Ausführungsbeispiel als Flachdichtung ausgebildet. Das Dichtelement 60 weist erste Dichtungsbohrungen 61 und zweite Dichtungsbohrungen 62 auf. Im dargestellten Ausführungsbeispiel weist das Dichtelement 60 vier zweite Dichtungsbohrungen 62 und zwei erste Dichtungsbohrungen 61 auf. In einem anderen nicht dargestellten Ausführungsbeispiel kann das Dichtelement 60 ein bis vier oder mehr als vier zweite Dichtungsbohrungen 62 und/oder ein bis zwei oder mehr als zwei erste Dichtungsbohrungen 61 auffalten. Die ersten Dichtungsbohrungen 61 und die zweiten Dichtungsbohrungen 62 sind im Wesentlichen benachbart zu dem äußeren, nicht bezeichneten Rand des Dichtelements 60 angeordnet. Im dargestellten Ausführungsbeispiel weist das Dichtelement 60 eine im Wesentlichen rechteckige Fläche mit abgerundeten Ecken auf. In einem anderen Ausführungsbeispiel kann das Dichtelement 60 eine runde Form und/oder eine eckige Form und/oder eine elliptische Form und/oder eine mehreckige Form aufweisen. Ferner weist das Dichtelement eine dritte Dichtungsbohrung 63 auf. Die dritte Dichtungsbohrung 63 weist im Wesentlichen denselben Durchmesser wie die Plattenbohrung 44 auf. Die zweite Dichtungsbohrung 62 weist im Wesentlichen denselben Durchmesser wie die Befestigungsbohrung 42 auf. Der Durchmesser der ersten Dichtungsbohrung 61 ist kleiner als der Durchmesser der zweiten Dichtungsbohrung 62. In einem anderen Ausführungsbeispiel weist die erste Dichtungsbohrung 61 einen größeren Durchmesser als die zweite Dichtungsbohrung 62 auf. Die dritte Dichtungsbohrung 63 weist einen größeren Durchmesser als die erste Dichtungsbohrung 61 und/oder die zweite Dichtungsbohrung 62 auf. In einem anderen Ausführungsbeispiel kann die dritte Dichtungsbohrung einen kleineren Durchmesser als die erste Dichtungsbohrung 61 und/oder als die zweite Dichtungsbohrung 62 aufweisen.

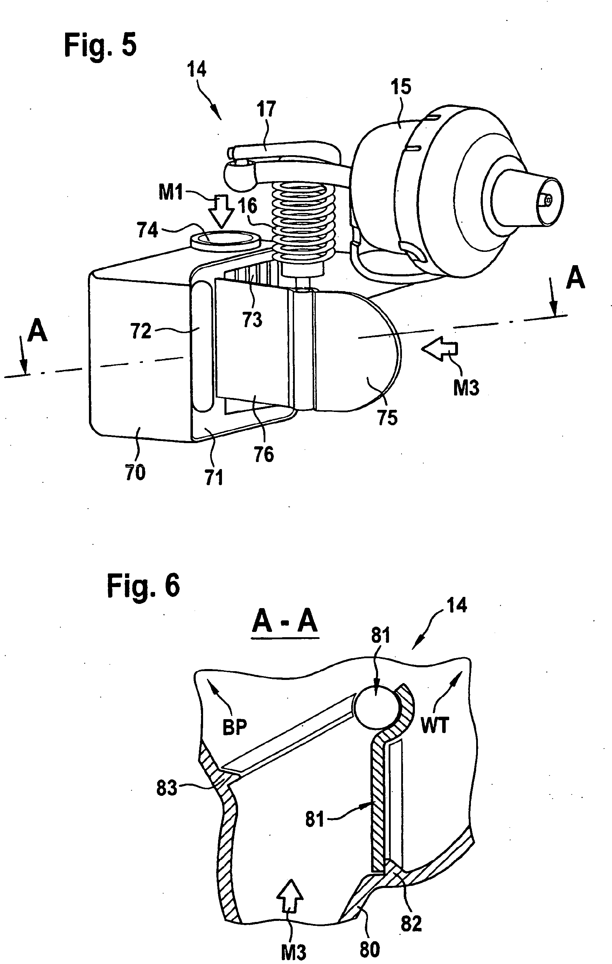

**Figur 5** zeigt eine isometrische Darstellung der Bypassklappe 14 mit einem Bypassklappenaktuator 15. Gleiche Merkmale sind mit den gleichen Bezugszeichen wie in den vorherigen Figuren versehen.

Ein Wärmetauschergehäuseabschnitt 70 des Wärmetauschers 2, insbesondere des Abgaswärmetauschers, ist im Wesentlichen als Quader mit abgerundeten Kanten und einer im Wesentlichen quadratischen Querschnittsfläche ausgebildet In einem anderen Ausführungsbeispiel kann der Wärmetauschergehäuseabschnitt 70 einen rechteckigen und/oder quadratischen und/oder runden und/oder elliptischen Querschnitt aufweisen.

Ein Rohrboden 71, der im Wesentlichen aus Edelstahl oder aus einem anderen Metall, wie beispielsweise Aluminium, oder aus einem wärmebeständigen Kunststoff oder aus Keramik oder aus einem Faserverbundwerkstoff ausgebildet ist, weist eine Bypassöffnung 72 auf, die im Wesentlichen als Langloch ausgebildet ist. Diese Bypassöffnung 72 ist von einer Bypassklappentrennwand 76 von einer Anzahl von Rohrbodenöffnungen 73 getrennt. Die Rohrbodenöffnungen 73 sind im Wesentlichen als Langloch ausgebildet und weisen einen geringeren Querschnitt als die Bypassöffnung 72 auf. Mehrere Rohrbodenöffnungen 73 sind rasterförmig in mehreren Reihen und Spalten angeordnet. Durch die Rohrbodenöffnungen 73 werden nicht dargestellte Flachrohre eingesteckt und mit dem Rohrboden formschlüssig beispielsweise durch Falzen, Bördeln, Verkrimpen usw. und/oder stoffschlüssig durch Schweißen, Löten, Kleben usw. verbunden. Drittes Medium, insbesondere Abgas M3, insbesondere wasserhaltige Kühlflüssigkeit oder Luft strömt in Richtung des Pfeils M3 auf das Bypassklappenelement 75 zu. Das Bypassklappenelement kann dabei verschiedene Positionen einnehmen. In einer ersten Position wird das gesamte dritte Medium M3 durch die Rohrbodenöffnungen 73 geleitet und kein drittes Medium M3 wird durch die Bypassöffnung 72 geleitet. In einer zweiten Stellung wird kein drittes Medium M3 durch die Rohrbodenöffnungen 73 und das gesamte dritte Medium M3 durch die Bypassöffnung 72 geleitet. In einer dritten Stellung des Bypassklappenelements 75 wird drittes Medium M3 sowohl durch die Rohrbodenöffnungen 73 als auch durch die Bypassöffnung 72 geleitet. In einer vierten Stellung des Bypassklappenelements 75 wird drittes Medium M3 weder durch die Bypassöffnung 72 noch durch die Rohrbodenöffnungen 73 geleitet.

Das Bypassklappenelement 75 wird im Wesentlichen von dem Bypassklappenaktuator 15 angesteuert bzw. betätigt. Der Bypassklappenaktuator 15 weist im dargestellten Ausführungsbeispiel ein nicht näher bezeichnetes Gehäuse auf, das aus Zylindersegmenten, die insbesondere konzentrisch angeordnet sind, zusammengesetzt ist. Der Bypassklappenaktuator 15 betätigt eine Bypassklappenhebevorrichtung 17, die über ein Bypassklappenfederelement 16 das Bypassklappenelement 75 betätigt. Das Bypassklappenfederelement 16 sorgt dafür, dass nach der Ansteuerung durch den Bypassklappenaktuator 15 das Bypassklappenelement 75 in eine bestimmte Position zurückgebracht wird.

Der Wärmetauschergehäuseabschnitt 70 weist einen Kühlmitteleintritt 74 auf, über den erstes Medium, insbesondere Kühlmittel, wie beispielsweise wasserhaltige Kühlflüssigkeit oder Luft oder zweites Medium, insbesondere wasserhaltige Kühlflüssigkeit oder Luft, in den Wärmetauscher 2 strömen.

In diesem Zusammenhang wird auf die noch unveröffentlichte DE 102 005 044 088.6 der Anmelderin hingewiesen, in der eine Vorrichtung zur Steuerung eines Abgasstroms offenbart ist. Hiermit gilt der gesamte Inhalt der unveröffentlichten DE 102 005 044 088.6 der Anmelderin ausdrücklich als offenbart.

Figur 6 zeigt eine Schnittdarstellung A-A durch die Bypassklappe 14. Gleiche Merkmale sind mit den gleichen Bezugszeichen versehen, wie in den vorherigen Figuren.

Die Bypassklappe 14 ist in einem Gehäusewandabschnitt 80 angeordnet. Der Gehäusewandabschnitt weist einen ersten Anschlag 82 für das Bypassklappenelement 81 sowie einen zweiten Anschlag 83 für das Bypassklappenelement 81 auf. Befindet sich das Bypassklappenelement benachbart zum ersten Anschlag 81 bzw. berührt es insbesondere den ersten Anschlag 82, kann drittes Medium in den Bypass BP und nicht zum Wärmetauscher WT strömen. Ist das Bypassklappenelement 81 benachbart zum zweiten Anschlag 83 angeordnet bzw. berührt das Bypassklappenelement 81 den zweiten Anschlag 83 zumindest abschnittsweise, strömt das gesamte dritte Medium M3 zum Wärmetauscher, insbesondere dem Abgaswärmetauscher 2 und nicht zum Bypasskanal BP. Befindet sich das Bypassklappenelement 81 in einer Position zwischen dem ersten Anschlag 82 und dem zweiten Anschlag 83, strömt drittes Medium M3 sowohl zum Wärmetauscher WT, insbesondere zum Abgaswärmetauscher 2, und zum Bypasskanal BP.

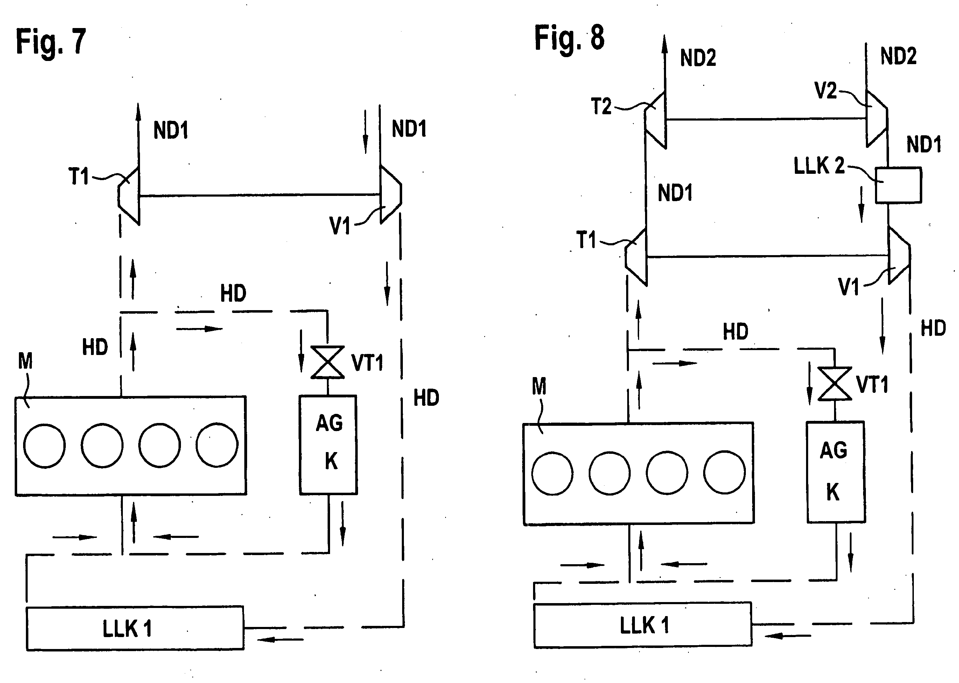

**Figur 7** zeigt eine schematische Darstellung eines Systems mit einem Abgaswärmetauscher AGK und einem kühlbaren Ventil VP1 auf der Hochdruckseite mit einstufiger Aufladung. Gleiche Merkmale sind mit den gleichen Bezugszeichen versehen, wie in den vorherigen Figuren.

Das in Figur 7 dargestellte System zeigt einen Verbrennungsmotor M, einen Wärmetauscher AGK, der dem Wärmetauscher 2, insbesondere dem Abgaswärmetauscher, entspricht. Ferner weist das System ein Ventil VT1 auf, das dem Ventil 1 entspricht. Von außen angesaugte Luft, die den Druck ND1, den Niederdruck, aufweist. Wird über einen ersten Verdichter V1, der über eine erste Turbine angetrieben wird, auf den höheren Druck HD, den Hochdruck, verdichtet. Die Turbine T1 und der Verdichter V1 sind als Turbolader ausgebildet. Die auf den Hochdruck HD komprimierte Luft erwärmt sich und wird in dem Ladeluftkühler LLK1 abgekühlt. Der abgekühlten Ladeluft wird rückgeführtes und abgekühltes Abgas beigemischt und die Ladeluftabgasmischung gelangt in den Verbrennungsmotor M. Abgas verlässt den Verbrennungsmotor M und ein Teil des Abgases wird dem ersten Ventil VT1, dem Ventil 1, insbesondere dem AGR-Ventil, zugeführt und anschließend im Wärmetauscher AGK, insbesondere dem Wärmetauscher 2, insbesondere dem Abgaswärmetauscher, gekühlt und wieder der komprimierten und abgekühlten Ladeluft beigemischt. In Figur 7 erfolgt die Aufladung der Ladeluft einstufig über den Verdichter V1 bzw. über den Turbolader.

**Figur 8** zeigt eine schematische Darstellung eines Systems mit einem Abgaswärmetauscher AGK und einem kühlbaren Ventil VT1 auf der Hochdruckseite mit zweistufiger Aufladung. Gleiche Merkmale sind mit den gleichen Bezugszeichen versehen, wie in den vorherigen Figuren.

Im Unterschied zu Figur 8 wird die auf dem Druckniveau ND2 von dem Niederdruckniveau, auf das Niederdruckniveau ND1 von dem Verdichter V2 verdichtet. Die verdichtete Luft erwärmt sich dabei und wird in dem Ladeluftkühler LLK2 abgekühlt und von dem Verdichter V1 auf das Hochdruckniveau HD verdichtet. Der Verdichter V1 wird von der ersten Turbine T1 angetrieben, die ein Teil des Abgases von dem Hochdruckniveau HD auf das Niederdruckniveau ND1 entspannt. Ferner wird der Verdichter V2 von der zweiten Turbine T2 angetrieben, die einen Teil des Abgases von dem Niederdruckniveau ND1 auf das Niederdruckniveau ND2 entspannt. Sowohl in Figur 7 als auch in Figur 8 ist das Ventil VT1, insbesondere das Ventil 1 zuströmseitig des Wärmetauschers AGK, insbesondere des Abgaswärmetauschers 2, angeordnet. Sowohl in Figur 1 als auch in Figur 8 ist das Ventil VT1 als separate Baueinheit vor dem Abgaswärmetauscher AGK, insbesondere dem Wärmetauscher 2, ausgebildet. In einem anderen Ausführungsbeispiel kann das Ventil VT1 einteilig mit dem Abgaswärmetauscher AGK ausgebildet sein bzw. in diesen integriert sein.

In einem anderen Ausführungsbeispiel kann das Ventil 1, VT1 auch abströmseitig des Wärmetauschers AGK, 2 angeordnet.

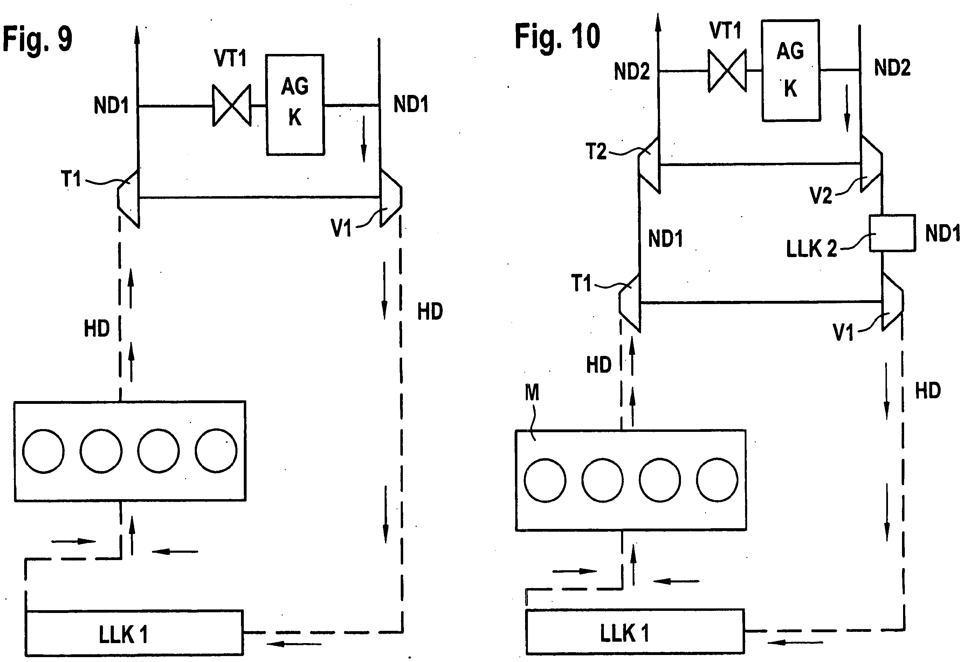

**Figur 9** zeigt eine schematische Darstellung eines Systems mit einem Wärmetauscher AGK und einem kühlbaren Ventil VT1 auf der Niederdruckseite mit einstufiger Aufladung. Gleiche Merkmale sind mit den gleichen Bezugszeichen versehen, wie in den vorherigen Figuren.

Im Unterschied zu Figur 7 sind das kühlbare Ventil VT1, insbesondere das Ventil 1, und/oder der Wärmetauscher AGK, insbesondere der Abgaswärmetauscher 2, auf der Niederdruckseite, d.h. abströmseitig der ersten Turbine T1 angeordnet. Im dargestellten Ausführungsbeispiel ist das Ventil VT1, insbesondere das Ventil 1, als separate Baueinheit zuströmseitig des Wärmetauschers AGK, insbesondere des Abgaswärmetauschers 2, angeordnet. In einem anderen Ausführungsbeispiel ist das Ventil VT1 einteilig mit dem Wärmetauscher AGK, insbesondere dem Abgaswärmetauscher 2, ausgebildet und/oder in diesen integriert.

**Figur 10** zeigt eine schematische Darstellung eines Systems mit einem Wärmetauscher AGK und einem kühlbaren Ventil VT1 auf der Niederdruckseite mit zweistufiger Aufladung. Gleiche Merkmale sind mit den gleichen Bezugszeichen verstehen, wie in den vorherigen Figuren.

Im Unterschied zu Figur 9 ist das Ventil VT1 und/oder der Wärmetauscher AGK, insbesondere der Abgaswärmetauscher 2, im Niederdruckbereich ND2 angeordnet. Das Ventil VT1, insbesondere das Ventil 1, ist abströmseitig der zweiten Turbine T2 angeordnet, ebenso wie der Abgaswärmetauscher AGK, insbesondere der Abgaswärmetauscher 2, wobei das Ventil VT1 als separate Baueinheit zuströmseitig des Wärmetauschers AGK angeordnet ist. In einem anderen Ausführungsbeispiel kann das Ventil VT1, insbesondere das Ventil 1, einteilig mit dem Wärmetauscher AGK, insbesondere dem Abgaswärmetauscher 2, ausgebildet sein und/oder in diesen integriert sein. Angesaugte Luft wird mit dem gekühlten, rückgeführten Abgas vermischt und im zweiten Verdichter V2 auf das Niederdruckniveau ND1 komprimiert, anschließend in einem zweiten Ladeluftkühler LLK2 abgekühlt und in einem ersten Verdichter V1 auf das Hochdruckniveau HD komprimiert.

Das Ventil 1, VT1 kann als Schiebeventil ausgebildet sein, beispielsweise wie in der unveröffentlichten DE 102 005 041 149.5, deren gesamter Inhalt hiermit als offenbart gilt. Ferner kann das Ventil 1, VT1 als Ventil ausgebildet sein, wie es in der unveröffentlichten DE 102 005 041 150.9 der Anmelderin offenbart ist, deren gesamter Inhalt hiermit ausdrücklich als offenbart gilt.

Das Ventil 1, VT1 kann auch als Ventil ausgeführt sein, wie es in der unveröffentlichten DE 102 005 044 089.4 der Anmelderin offenbart ist, deren gesamter Inhalt hiermit als ausdrücklich offenbart gilt. Ferner kann das Ventil 1, VT1 auch als Ventil ausgebildet sein, wie dieses in der unveröffentlichten DE 102 005 058 494.2 der Anmelderin offenbart ist, deren gesamter Inhalt hiermit ausdrücklich als offenbart gilt.

Die Merkmale der verschiedenen Ausführungsbeispiele sind beliebig miteinander kombinierbar. Die Erfindung ist auch für andere als die gezeigten Gebiete einsetzbar.

### Bezugszeichenliste

- 1: Ventil
- 2: Wärmetauscher
- 3: Platte
- 4: Zufluss
- 5: Abfluß
- M1: erstes Medium
- M2: zweites Medium
- M3: drittes Medium
- 6: Eintrittsdiffusor
- 7: Ventilgehäuse
- 8: Ventilgehäuseflansch
- 9: Ventilgehäuseflanschbohrung
- 10: Ventilgehäuseanschlussflansch
- 11: Ventilgehäusebefestigungsöse
- 12: Ventilgehäuseanschlussflanschbohrung
- 13: Ventilgehäuseanschlussflanschöffnung
- 14: Bypassklappe
- 15: Bypassklappenaktuator
- 16: Bypassklappenfederelement
- 17: Bypassklappenhebevorrichtung
- 18: Ventilaktuator
- 19: Wärmetauschergehäuse
- 20: Kühlmedieneintritt
- 21: Wärmetauscheraustrittsdiffusor
- 22: Wärmetauscheraustrittsdiffusorflansch
- 23: Wärmetauschereintrittsdiffusorflansch
- 30: Ringkanal
- 31: Wandpaarung
- 32: erste Plattenwand
- 33: zweite Plattenwand
- 34: ersten Plattenöffnung
- 35: zweite Plattenöffnung
- 36: Wärmeübertragungskanal
- 37: Versteifungseinrichtung
- 38: Hohlräume zur Gewichtseinsparung
- 39: dritte Flanschfläche
- 40: erste Flanschfläche
- 41: Blende
- 42: Befestigungsbohrung
- 43: Plattenaußenwand
- 44: Plattenbohrung
- 45: erster Wärmeübertragungskanalboden
- α: Winkel
- 50: zweiter Wärmeübertragungskanalboden
- 60: Dichtelement
- 61: erste Dichtungsbohrung
- 62: zweite Dichtungsbohrung
- 63: dritte Dichtungsbohrung
- 70: Wärmetauschergehäuseabschnitt
- 71: Rohrboden
- 72: Bypassöffnung
- 73: Rohrbodenöffnung
- 74: Kühlmitteleintritt
- 75: Bypassklappenelement
- 76: Bypassklappentrennwand
- 80: Gehäusewandabschnitt
- 81: Bypassklappenelement
- 82: erster Anschlag
- 83: zweiter Anschlag
- WT: Wärmetauscher 2
- BP: Bypass
- M: Verbrennungsmotor
- LLK1: Ladeluftkühler
- LLK2: zweiter Ladeluftkühler
- AGK: Wärmetauscher, insbesondere Wärmetauscher 2
- VT1: Ventil, insbesondere Ventil 1
- T1: erste Turbine
- V1: erster Verdichter bzw. erster Kompressor
- ND1: erster Niederdruckbereich
- ND2: zweiter Niederdruckbereich
- HD: Hochdruckbereich
- T2: zweite Turbine
- V2: zweiter Verdichter bzw. zweiter Kompressor

## Patentansprüche

1. Ventil zur Regelung eines Abgasstroms eines Verbrennungsmotors Aufweisend zumindest ein Verschlusselement, zumindest einen Aktuator zur Betätigung des Versrhlusselements, **dadurch gekennzeichnet, dass** das Ventil (1, VT1) zumindest einen Wärmeübertragungskanal (30, 36) zur Ventilkühlung aufweist, der mit zumindest einem ersten Medium (M1) durchströmbar ist und der Wärmeübertragungskanal (36) als Ringkanal (30) ausgebildet ist, wobei der Wärmeübertragungskanal (30, 36) zumindest eine Wandpaarung (31) aufweist, deren Wände (32, 33) zu einander konzentrisch ausgebildet sind und das Ventil (1, VT1) zumindest eine erste Öffnung (34) für den Zufluss (4) des ersten Mediums (M1) und zumindest eine zweite Öffnung (35) für den Abfluss (5) des ersten Mediums (M1) aufweist, wobei das Ventil (1, VT1) zumindest eine Platte (3) aufweist, in der der Wärmeübertragungskanal (30, 36) angeordnet ist und die Platte im Wesentlichen rechteckig ausgebildet Ist und Versteifungseinrichtungen (37) und Hohlräume (38) zur Gewichtseinsparung aufweist, wobei in dem Wärmeübertragungskanal (30, 36) zumindest eine Blende (41) zur Verhinderung der Umströmung des Wärmeübertragungskanals (30, 36) angeordnet ist.

2. Ventil nach einem der vorhergehenden Ansprüche, **dadurch gekennzeichnet, dass** das erste Medium (M1) Kühlmittel, insbesondere eine Kühlflüssigkeit oder Luft, ist.

3. Ventil nach Anspruch 1 oder 2, **dadurch gekennzeichnet, dass** die Platte (3) mit einem Ventilgehäuse (7) stoffschlüssig und/oder formschlüssig verbunden ist.

4. Ventil nach Anspruch 3, **dadurch gekennzeichnet, dass** die Platte (3) einteilig mit dem Ventilgehäuse (7) ausgebildet ist.

5. Ventil nach einem der Ansprüche 1 bis 4, **dadurch gekennzeichnet, dass** die Platte (3) zumindest eine erste Flanschfläche (39, 40) zur Befestigung aufweist.

6. Ventil nach einem der vorhergehenden Ansprüche, **dadurch gekennzeichnet, dass** das Ventil (1, VT1) zumindest ein Dichtelement (60), insbesondere eine Flachdichtung, zur Abdichtung aufweist.

7. Wärmetauscher zur Abgaskühlung mit zumindest einem Ventil (1, VT1) nach einem der Ansprüche 1 bis 6.

8. Wärmetauscher nach Anspruch 7, **dadurch gekennzeichnet, dass** der Wärmetauscher (2, AGK) einen ersten Strömungskanal aufweist, der mit dem ersten Medium (M1) und/oder mit einem zweiten Medium (M2) durchströmbar ist.

9. Wärmetauscher nach Anspruch 7 oder 8, **dadurch gekennzeichnet, dass** der Wärmetauscher (2, AGK) einen zweiten Strömungskanal aufweist, der mit einem dritten Medium (M3) durchströmbar ist

10. System mit zumindest einem Ventil (1, VT1) nach einem der Ansprüche 1 bis 6 und mit zumindest einem Wärmetauscher (2, AGK) nach einem der Ansprüche 7 bis 9 aufweisend
zumindest einen Verbrennungsmotor (M) für ein Fahrzeug, zumindest eine erste Turbine (T1) eines Abgasturboladers, wobei das Ventil zuströmseitig des Wärmetauschers (2, AGK) und der Wärmetauscher (2, AGK) auf der Hochdruckseite der ersten Turbine (T1) angeordnet ist.

11. System mit zumindest einem Ventil (1, VT1) nach einem der Ansprüche 1 bis 6 und mit zumindest einem Wärmetauscher (2, AGK) nach einem der Ansprüche 7 bis 9 aufweisend
zumindest einen Verbrennungsmotor (M) für ein Fahrzeug, zumindest eine erste Turbine (T1) eines Abgasturboladers, wobei das Ventil (1, VT1) zuströmseitig des Wärmetauschers (2, AGK) und der Wärmetauscher (2, AGK) auf der Niederdruckseite der ersten Turbine (T1) angeordnet ist.

12. System nach Anspruch 10 oder 11, **dadurch gekennzeichnet, dass** das System mindestens einen zweiten Wärmetauscher (LLK1, LLK2) zur Ladeluftkühlung aufweist und/oder die erste Turbine (T1) einen ersten Kompressor (V1) zur Ladeluftaufladung antreibt.

13. System nach einem der Ansprüche 10 bis 12, **dadurch gekennzeichnet, dass** das System zumindest eine zweite Turbine (T2) aufweist, die zumindest einen zweiten Kompressor (V2) zur Ladeluftaufladung antreibt.

## Claims

1. A valve for regulating an exhaust gas flow of an internal combustion engine, having at least one closure element sand at least one actuator for activating the closure element, **characterized in that** the valve (1, VT1) has at least one heat transfer duct (30, 36) for cooling the valve, through which heat transfer duct (30, 36) at least a first medium (M1) can flow, and **in that** the heat transfer duct (36) is embodied as an annular duct (30), wherein the heat transfer duct (30, 36) has at least one wall pairing (31) whose walls (32, 33) are embodied concentrically with respect to one another, and the valve (1, VT1) has at least a first opening (34) for the inflow (4) of the first medium (M1) and at least a second opening (35) for the outflow (5) of the first medium (M1), wherein the valve (1, VT1) has at least one plate (3) in which the heat transfer duct (30, 36) is arranged, and the plate is embodied as substantially rectangular and has reinforcing devices (37) and cavities (38) in order to save weight, wherein at least one aperture (41) for preventing a flow aground the heat transfer duct (30, 36) is arranged in the heat transfer duct (30, 36).

2. The valve as claimed in one of the preceding claims, **characterized in that** the first medium (M1) is coolant, in particular a cooling fluid or air.

3. The valve as claimed if claim 1 or 2, **characterized in that** the plate (3) is connected to a valve housing (7) in a materially joined and/or positively locking fashion.

4. The valve as claimed in claim 3, **characterized in that** the plate (3) is embodied in one piece with the valve lousing (7).

5. The valve as claimed in one of claims 1 to 4, **characterized in that** the plate (3) has at least a first flange face (39, 40) for fastening purposed.

6. The valve as claimed in one of the preceding claims, **characterized in that** the valve (1, VT1) has at least once stealing element (60), in particular a flat seal, for sealing purposed.

7. The heat exchanger for cooling an exhaust gas having at least one valve (1, VT1) as claimed in one of claims 1 to 6.

8. The heat exchanger as claimed in claim 7, **characterized in that** the heat exchanger (2, AGK) has a first flow duct through which the first medium (M1) and/or a second medium (M2) can flow.

9. The heat exchanger as claimed in claim 7 or 8, **characterized in that** the heat exchanger (2, AGK) has a second flow duct through which a third medium (M3) can flow.

10. A system having at least one value (1, VT1) has claimed in one of claims 1 to 6 and having at least one heat exchanger (2, AGK) as claimed in one of claims 7 to 9, having at least one interval combustion engine (M) for a vehicle, at least a first turbine (T1) of an exhaust gas turbosupercharger, wherein the valve is arranged can the inflow side of the heat exchanger (2, AGK), and the heat exchanger (2, AGK) is arranged on the high pressure side of the first turbine (T1).

11. The system having at least one valve (1, VT1) as claimed in one of claims 1 to 6 and having at least one heat exchanger (2, AGK) as claimed in one of claims 7 to 9, having at least one internal combustion engine (M) for a vehicle, at least a first turbine (T1) of an exhaust gas turbosupercharger, wherein the valve (1, VT1) is arranged on the inflow side of the heat exchanger on AGK), and the heat exchanger (2, AGK) is arranged on the low pressure side of the first turbine (T1).

12. The system as claimed in claim 10 or 11, **characterized in that** the system has at least a second heat exchanger (LLK1, LLK2) for cooling charge air and/or the first turbine (T1) has a first compressor (V1) for supercharging charge air.

13. The system as claimed in one of claims 10 to 12, **characterized in that** the system has at least a second turbine (T2) which drives at least a second compressor (V2) for supercharging charge air.

## Revendications

1. Soupape de régulation d'un flux de gaz d'échappement d'un moteur à combustion interne, présentant au moins un élément de fermeture, au moins un actionneur servant à commander l'élément de fermeture,
**caractérisée en ce que** la soupape (1, VT1) présente au moins un conduit de transfert de chaleur (30, 36) servant au refroidissement de la soupape, conduit de transfert de chaleur qui peut être traversé par au moins un premier milieu (M1), et le conduit de transfert de chaleur (36) est configuré comme un conduit annulaire (30), où le conduit de transfert de chaleur (30, 36) présente au moins une paire de parois (31) dont les parois (32, 33) sont configurées de façon concentrique l'une par rapport à l'autre, et la soupape (1, VT1) présente au moins une première ouverture (34) pour l'alimentation (4) du premier milieu (M1) et au moins une deuxième ouverture (35) pour l'évacuation (5) du premier milieu (M1), où la soupape (1, VT1) présente au moins une plaque (3) dans laquelle est disposé le conduit de transfert de chaleur (30, 36), et la plaque est configurée essentiellement de façon rectangulaire et présente des dispositifs de renfort (37) et des espaces creux (38) pour gagner du poids, où est disposé, dans le conduit de transfert de chaleur (30, 36), au moins un obturateur (41) servant à empêcher le conduit de transfert de chaleur (30, 36) d'être baigné par l'écoulement.

2. Soupape selon l'une quelconque des revendication précédentes, **caractérisée en ce que** le premier milieu (M1) est un moyen de refroidissement, en particulier un liquide de refroidissement ou de l'air.

3. Soupape selon la revendications 1 ou 2, **caractérisée en ce que** la plaque (3) est assemblée avec la cage de soupape (7) par continuité de matière est / ou par complémentarité de formé.

4. Soupape selon la revendication 3, **caractérisée en ce que** la plaque (3) est configurée en fermant une seule et même pièce avec la cage de soupape (7).

5. Soupape selon l'une quelconque des revendications 1 à 4, **caractérisée en ce que** la plaqué (3) présente, pour la fixation, au moins une première surface de bride (39, 40).

6. soupape selon l'une quelconque des revendications précédentes, **caractérisée en ce que** la soupape (1, VT1) présente, pour l'étanchéité, au moins un élément d'étanchéité (60), en particulier une joint plat.

7. Echangeur de chaleur pour le refroidissement des gaz d'échappement, comprenant au moins une soupape (1, VT1) selon l'une quelconque des revendications 1 à 6.

8. Echangeur de chaleur selon la revendication 7, **caractérisé en ce que** l'échangeur de chaleur (2, AGK) présente un premier conduit d'écoulement qui peut être traversé par le premier milieu (M1) et / ou par un deuxième milieu (M2).

9. Echangeur de chaleur selon la revendication 7 ou 8, **caractérisé en ce que** l'échangeur de chaleur (2, AGK) présenté un deuxième conduit d'écoulement qui peut être traversé par un troisième milieu (M3).

10. Système comprenant au moins une soupape (1, VT1) selon l'une quelconque des revendications 1 à 6 et comprenant au moins un échangeur de chaleur (2, AGK) selon l'une quelconque des revendications 7 à 9, ledit système présentait
au moins un moteur à combustion interne (M) pour un véhicule,
au moins une première turbine (T1) d'un turbocompresseur, ou la soupape est disposée sur le côté alimentation de l'échangeur de chaleur (2, AGK), l'échangeur de chaleur (2, AGK) étant disposé sur le côté haute pression de la première turbine (T1).

11. Système comprenant au moins une soupape (1, VT1) selon l'une quelconque des revendications 1 à 6 et comprenant au moins un échangeur de chaleur (2, AGK) selon l'une quelconque des revendications 7 à 9, ledit système présentent
au moins un moteur à combustion interne (M) pour un véhicule,
au moins une première turbine (T1) d'un turbocompresseur, où la soupape (1, VT1) est disposée sur le côté alimentation de l'échangeur de chaleur (2, AGK), l'échangeur de chaleur (2, AGK) étant disposé sur le côté basse pression de la première turbine (T1).

12. Système selon la revendication 10 ou 11, **caractérisé en ce que** le système présenté au moins un deuxième échangeur de chaleur (LLK1, LLK2) servant au refroidissement de l'air de suralimentation et / ou la première turbine (T1) entraîne un premier compresseur (V1) servant à la suralimentation en air de suralimentation.

13. Système selon l'une quelconque des revendication 10 à 12, **caractérisé en ce que** le système présente au moins une deuxième turbine (T2) qui entraîne au moins un deuxième compresseur (V2) servant à la suralimentation en air de suralimentation.
